# EUROPEAN PATENT APPLICATION

(11) **EP 4 366 214 A1**
(43) Date of publication of application: **08.05.2024**
(21) Application number: 23195352.2
(22) Date of filing: 05.09.2023
(51) Int. Cl.: H04L 5/00, H04W 72/21

(54) **METHOD FOR REPORTING CAPABILITY OR INCAPABILITY OF A USER EQUIPMENT**

(30) Priority: 04.11.2022 FI 20225994
(71) Applicant: Nokia Technologies Oy, 02610 Espoo (FI)
(72) Inventor: MARCONE, Alessio, Munich (DE); FREDERIKSEN, Frank, Klarup (DK); AHMADZADEH, Arman, Munich (DE)
(74) Representative: Nokia EPO representatives

(57) **Abstract**

There is provided an apparatus comprising: at least one processor; and at least one memory storing instructions that, when executed by the at least one processor, cause the apparatus at least to perform: determining signal characteristics of a physical uplink control channel to indicate capability or incapability of the apparatus to transmit the physical uplink control channel with repetitions; and transmitting, to a network node, the physical uplink control channel with the signal characteristics indicating capability or incapability of the apparatus to transmit the physical uplink control channel with repetitions.

## Description

### FIELD

Various example embodiments relate to reporting capability or incapability of a user equipment to a network.

### BACKGROUND

Coverage enhancements may be used to enhance operation of wireless communication systems. Coverage enhancements may be used for example in various cellular communication networks, such as, in cellular communication networks operating according to 5G radio access technology. 5G radio access technology may also be referred to as New Radio, NR, access technology. 3rd Generation Partnership Project, 3GPP, develops standards for 5G/NR and one of the topics in the 3GPP discussions is related to coverage enhancements. According to the discussions, there is a need to provide enhanced methods, apparatuses and computer programs related to coverage enhancements in cellular communication networks. Such enhancements may also be beneficial in other wireless communication networks, such as in 6G networks in the future, as well.

### SUMMARY

According to some aspects, there is provided the subject-matter of the independent claims. Some example embodiments are defined in the dependent claims. The scope of protection sought for various example embodiments is set out by the independent claims. The example embodiments and features, if any, described in this specification that do not fall under the scope of the independent claims are to be interpreted as examples useful for understanding various example embodiments.

According to an aspect there is provided a method, comprising: determining, by a user equipment, signal characteristics of a physical uplink control channel to indicate capability or incapability of the apparatus to transmit the physical uplink control channel with repetitions; and transmitting, to a network node, the physical uplink control channel with the signal characteristics indicating capability or incapability of the apparatus to transmit the physical uplink control channel with repetitions. The method may be performed by a user equipment.

According to an embodiment, the signal characteristics comprise a dedicated demodulation reference signal pattern for indicating capability or incapability of the apparatus to transmit the physical uplink control channel with repetitions.

According to an embodiment, the method comprises: transmitting the physical uplink control channel with the dedicated demodulation reference signal pattern.

According to an embodiment, the signal characteristics comprise a slot shift or a specific slot for transmission of the physical uplink control channel for indicating capability or incapability of the apparatus to transmit the physical uplink control channel with repetitions.

According to an embodiment, the method comprises: transmitting the physical uplink control channel in a slot different than the one indicated by the network node for transmission of the physical uplink control channel, wherein the slot is determined based on a slot shift or a specific slot according to configuration or pre-configuration.

According to an embodiment, the signal characteristics comprise a second physical uplink control channel resource for transmission of the physical uplink control channel, wherein the second physical uplink control channel resource is different from a first physical uplink control channel resource for transmission of the physical uplink control channel in at least one of the following: a time domain, a frequency domain, or a code domain, wherein the second physical uplink control channel resource indicates capability of the apparatus to transmit the physical uplink control channel with repetitions and the first control channel resource indicates incapability of the apparatus to transmit the physical uplink control channel with repetitions.

According to an embodiment, the method comprises: transmitting the physical uplink control channel on the second physical uplink control channel resource.

According to an embodiment, the method comprises: receiving a cell-specific configuration for transmitting the physical uplink control channel with repetitions.

According to an embodiment, the transmitted physical uplink control channel comprises an acknowledgement, ACK, or a negative acknowledgement, NACK, of a radio resource control setup message.

According to an aspect, there is provided an apparatus comprising means for performing the method of the above aspect and any of the embodiments thereof. The apparatus may be a user equipment.

According to an embodiment, the means comprises comprises at least one processor; and at least one memory storing instructions that, when executed by the at least one processor, cause the performance of the apparatus. The apparatus may be a user equipment.

According to an aspect, there is provided a computer readable medium comprising instructions that, when executed by an apparatus, cause the apparatus to perform at least the method of the aspect above and any of the embodiments thereof. The apparatus may be a user equipment.

According to an aspect, there is provided a computer program comprising instructions, which, when executed by an apparatus, cause the apparatus to perform the method of the aspect above and any of the embodiments thereof. The apparatus may be a user equipment.

According to an aspect, there is provided a method, comprising: receiving, by a network node from a user equipment, a physical uplink control channel with signal characteristics indicating capability or incapability of the user equipment to transmit the physical uplink control channel with repetitions; and based on the capability or incapability of the user equipment, determining whether the physical uplink control channel is received with repetitions. The method may be performed by a network node.

According to an embodiment, the signal characteristics comprise a demodulation reference signal pattern for indicating capability or incapability of the user equipment to transmit the physical uplink control channel with repetitions.

According to an embodiment, the method comprises: receiving the physical uplink control channel with the dedicated demodulation reference signal pattern; and determining, based on the dedicated demodulation reference signal pattern, that the user equipment is capable or incapable to transmit the physical uplink control channel with repetitions.

According to an embodiment, wherein the signal characteristics comprise a slot shift or a specific slot for transmission of the physical uplink control channel for indicating capability or incapability of the apparatus to transmit the physical uplink control channel with repetitions.

According to an embodiment, the method comprises receiving the physical uplink control channel in a slot different than the one indicated by the apparatus for transmission of the physical uplink control channel, wherein the slot is determined based on a slot shift or a specific slot according to configuration or pre-configuration; and determining, based on a received transmission in the different slot, that the user equipment is capable or incapable to transmit the physical uplink control channel with repetitions.

According to an embodiment, the signal characteristics comprise a second physical uplink control channel resource, which is different from a first physical uplink control channel resource in at least one of the following: a time domain, a frequency domain, or a code domain, wherein the second physical uplink control channel resource indicates capability of the user equipment to transmit the physical uplink control channel with repetitions and the first control channel resource indicates incapability of the user equipment to transmit the physical uplink control channel with repetitions.

According to an embodiment, the method comprises: receiving the physical uplink control channel on the second physical uplink control channel resource.

According to an embodiment, the method comprises: determining that the user equipment is incapable to transmit the physical uplink control channel with repetitions; disregarding other slots allocated to physical uplink control channel repetitions, wherein the other slots are other than a slot carrying the physical uplink control channel.

According to an aspect, there is provided an apparatus comprising means for performing the method of the above aspect and any of the embodiments thereof. The apparatus may be a network node.

According to an embodiment, the means comprises comprises at least one processor; and at least one memory storing instructions that, when executed by the at least one processor, cause the performance of the apparatus. The apparatus may be a network node.

According to an aspect, there is provided a computer readable medium comprising instructions that, when executed by an apparatus, cause the apparatus to perform at least the method of the aspect above and any of the embodiments thereof. The apparatus may be a network node.

According to an aspect, there is provided a computer program comprising instructions, which, when executed by an apparatus, cause the apparatus to perform the method of the aspect above and any of the embodiments thereof. The apparatus may be a network node.

### BRIEF DESCRIPTION OF THE DRAWINGS

Some example embodiments will now be described with reference to the accompanying drawings.
Fig. 1 shows, by way of example, a network architecture of communication system;
Fig. 2 shows, by way of example, a physical uplink control channel format 1 slot;
Fig. 3 shows, by way of example, a flowchart of a method;
Fig. 4 shows, by way of example, a flowchart of a method;
Fig. 5 shows, by way of example, signalling between entities;
Fig. 6 shows, by way of example, signalling between entities;
Fig. 7 shows, by way of example, a block diagram of an apparatus;
Fig. 8 shows, by way of example, signalling between entities; and
Fig. 9 shows, by way of example, signalling between entities.

### DETAILED DESCRIPTION

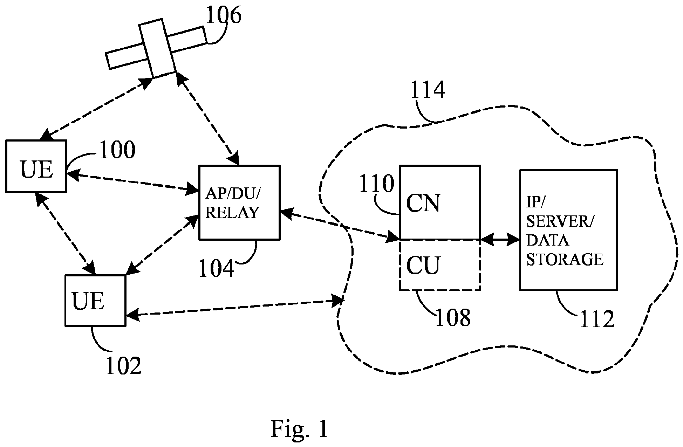

Fig. 1 shows, by way of an example, a network architecture of communication system. In the following, different exemplifying embodiments will be described using, as an example of an access architecture to which the embodiments may be applied, a radio access architecture based on long term evolution advanced (LTE Advanced, LTE-A) or new radio (NR), also known as fifth generation (5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

The example of Fig. 1 shows a part of an exemplifying radio access network. Fig. 1 shows user devices or user equipments (UEs) 100 and 102 configured to be in a wireless connection on one or more communication channels in a cell with an access node, such as gNB, i.e. next generation NodeB, or eNB, i.e. evolved NodeB (eNodeB), 104 providing the cell. The physical link from a user device to the network node is called uplink (UL) or reverse link and the physical link from the network node to the user device is called downlink (DL) or forward link. It should be appreciated that network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. An example of the network node configured to operate as a relay station is integrated access and backhaul node (IAB). The distributed unit (DU) part of the IAB node performs BS functionalities of the IAB node, while the backhaul connection is carried out by the mobile termination (MT) part of the IAB node. UE functionalities may be carried out by IAB MT, and BS functionalities may be carried out by IAB DU. Network architecture may comprise a parent node, i.e. IAB donor, which may have wired connection with the CN, and wireless connection with the IAB MT.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

Additionally, although the apparatuses have been depicted as single entities, different units, processors and/or memory units (not all shown in Fig. 1) may be implemented inside these apparatuses, to enable the functioning thereof.

5G enables using multiple input - multiple output (MIMO) technology at both UE and gNB side, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 7GHz - cmWave, below 7GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side (in a distributed unit, DU 104) and non-real time functions being carried out in a centralized manner (in a centralized unit, CU 108).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the constellation may cover several satellite-enabled network entities that create on-ground cells. The on-ground cells may be created through an on-ground relay node 104 or by a gNB located on-ground or in a satellite.

When a user equipment (UE) is to be connected to the network, the UE performs a random access procedure to synchronize with the network. Random access procedure may be contention based random access (CBRA) or contention free random access (CFRA).

For example, in 5G new radio (NR), two CBRA procedures are supported: a 4-step random access channel (RACH) procedure and a 2-step RACH procedure.

Before the RACH procedure, a network node performs DL beam sweeping so that the UE may select the index of a preferred synchronization signal block (SSB) beam and decode the associated physical broadcast channel (PBCH) for master information block (MIB) and system information block (SIB), etc. The selected index is also used by the UE to identify a suitable RACH occasion (RO) for a preamble transmission, according to the SSB-to-RO mapping conveyed by SIB type 1 (SIB1). The network node may use the same SSB index for transmission of a random access response (RAR).

In 4-step RACH procedure, the UE sends a preamble to a network node, e.g. gNB, via physical random access channel (PRACH) using a resource named as RACH occasion (RO). This first message may be referred to as a random access request or Msg1, for example.

The network node responds with a random access response (RAR) message, that is, Msg2 or a second message. The RAR message includes the detected preamble identifier (ID), time-advance command, a temporary cell radio network temporary identifier (TC-RNTI), and LTL grant for the transmission of the following message, Msg3, on a physical uplink shared channel (PUSCH).

The UE responds to Msg2 with a radio resource control (RRC) request, that is, Msg3 or a third message. The Msg3 is transmitted on the scheduled PUSCH with an ID for contention resolution.

The network node transmits RRC setup message, which may be referred to as a Msg4 or message 4 or random access msg4 or random access message 4 or a contention resolution message or a fourth message. The RRC setup message may include a contention resolution ID.

If the Msg4 includes the contention resolution ID of the UE, the UE sends, after receiving the Msg4, an acknowledgement ACK on a physical uplink control channel (PUCCH). This acknowledgement may be a hybrid automatic repeat request acknowledgment (HARQ-ACK). This completes the 4-step RACH procedure.

The physical uplink control channel (PUCCH) is the channel used in the uplink (UL) by a UE for conveying control information through the uplink control information (UCI). PUCCH time-frequency resources are RRC configured per UE, and different resources may be configured for different number of bits in the UCI. For example, for UCI with payload smaller than 2 bits, up to 32 PUCCH resources may be configured, whereas for UCI with payload larger than 2 bits, up to 8 PUCCH resources may be configured.

PUCCH resources may be used for reporting different UCI types, including HARQ-ACK, scheduling request (SR) and channel state information (CSI), in a periodic, semi-persistent or dynamic manner. For example, the HARQ-ACK feedback for a scheduled physical downlink shared channel (PDSCH) may be conveyed through a PUCCH resource indicated by the PUCCH resource indicator (PRI) field in the scheduling DCI. Conversely, periodic CSI may be conveyed by a periodic PUCCH resource which is RRC configured.

In initial access, and for transmission of the HARQ-ACK feedback for the Msg4, the LTE specific RRC configuration of PUCCH resources has not occurred yet. For this reason, PUCCH resource sets, which may be used before a dedicated PUCCH resource configuration occurs, have been defined in 3GPP TS 38.213 version 17.3.0. (Table 9.2.1-1). The table 9.2.1-1 lists 16 different PUCCH resource sets.

According to the table 9.2.1-1, PUCCH format 0 and format 1 can be indicated to the LTE for the Msg4 HARQ-ACK. Both PUCCH formats may carry up to 2 bits, with a difference that PUCCH format 0 may occupy up to two orthogonal frequency-division multiplexing (OFDM) symbols in one slot whereas PUCCH format 1 may occupy up to 14 OFDM symbols in one slot. This may make PUCCH format 1 the best candidate PUCCH format in case of low coverage scenarios. The reason for allowing only these two PUCCH formats (format 0 and format 1) during initial access is that, in general, the UE is not known to the network, and hence the UE might not be expected to be able to provide any of the other associated information that may be carried on the PUCCH, such as SR and CSI.

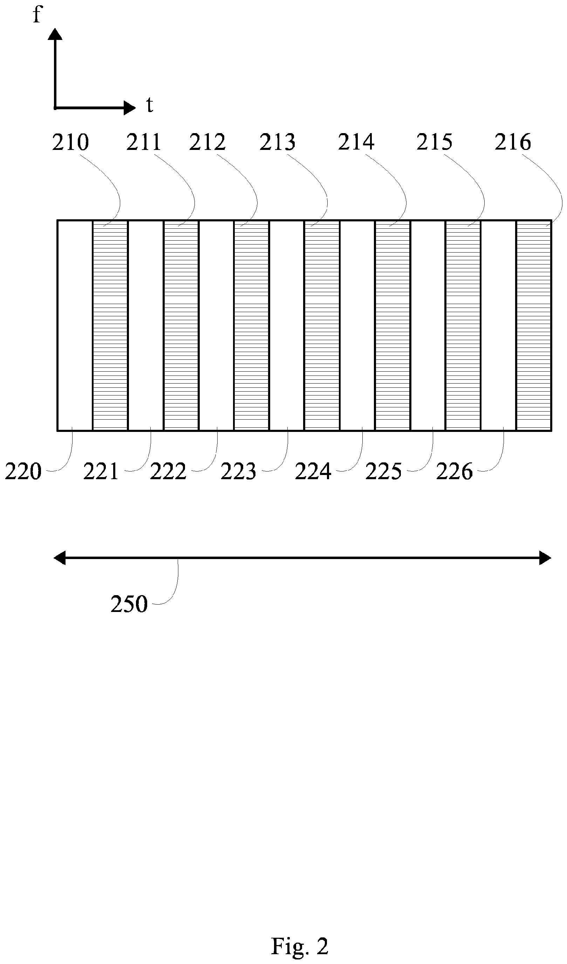

Fig. 2 shows, by way of example, a PUCCH format 1 slot 250. PUCCH format 1 relies on a coherent demodulation process at the receiver, and hence it may be transmitted by a UE with an associated demodulation reference signal (DMRS). For example, as shown in Fig. 2, for the case of a PUCCH format 1 with length 14 OFDM symbols, only 7 symbols 210, 211, 212, 213, 214, 215, 216 are actually used for UCI transmission (e.g. HARQ-ACK), and the remaining 7 symbols 220, 221, 222, 223, 224, 225, 226 are used for DMRS transmission. In particular, the DMRS symbols occupy OFDM symbols {0,2,4,... }, wherein symbol 0 is the first OFDM symbol 220 of the PUCCH transmission.

PUCCH resource for transmission of the HARQ-ACK feedback after a PDSCH reception may be RRC configured and dynamically indicated to the UE via the same DCI as the DCI scheduling the corresponding PDSCH. For example, DCI format 1_0 used for scheduling a PDSCH includes bit fields used for indication of the PUCCH resources to be used for the HARQ feedback. For example, the field PUCCH resource indicator (PRI) may be used to indicate one of the RRC configured PUCCH resources in terms of time-frequency allocation within a slot, whereas the field PDSCH-to-HARQ_feedback timing indicator may be used to indicate to the UE the slot where the PUCCH should be transmitted as an offset from the slot of the received PDSCH.

Repetitions of transmission allow a receiver, the network node in this case, to collect more energy from the transmitting entity and thereby increase the receiving signal-to-noise ratio (SNR), detection performance and decoding performance.

The PUCCH carrying the Msg4 HARQ-ACK might not meet the coverage requirements. A reason for this may be that PUCCH repetitions might not yet be possible for this type of PUCCH. This HARQ-ACK is transmitted before dedicated RRC configuration of the PUCCH resources and parameters, such as number of repetitions. Currently, there is no way to indicate the number of repetitions for such PUCCH.

In addition, currently, UE is not required to support dynamic PUCCH repetitions for different PUCCH formats (e.g. format 0 or format 1). Network might not be aware of UE capabilities and necessities when UE is not yet in RRC connected state. Thus, network might not know whether the LTE is capable of supporting repetitions of PUCCH transmissions.

Methods are provided for reporting LTE capability of supporting PUCCH repetitions.

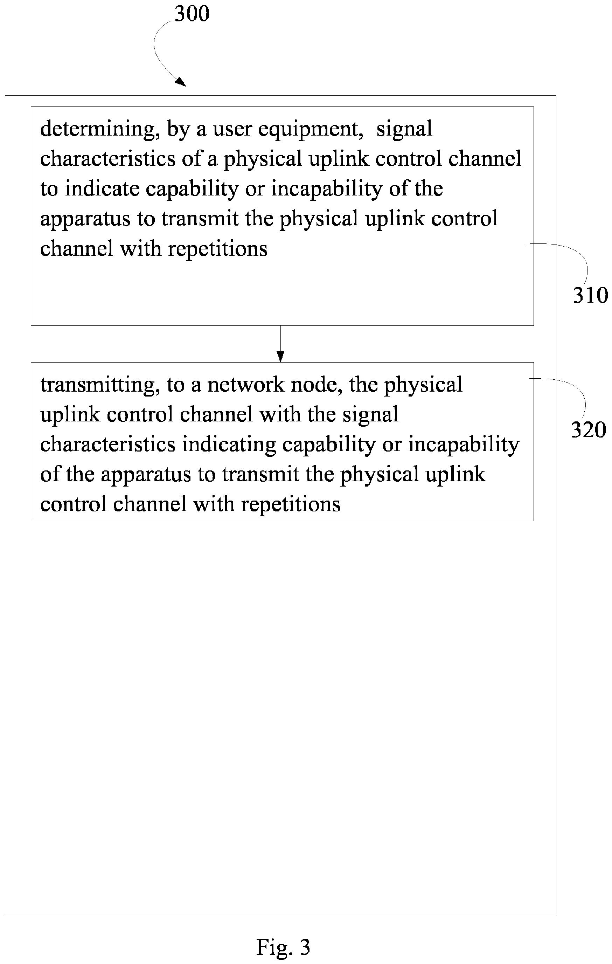

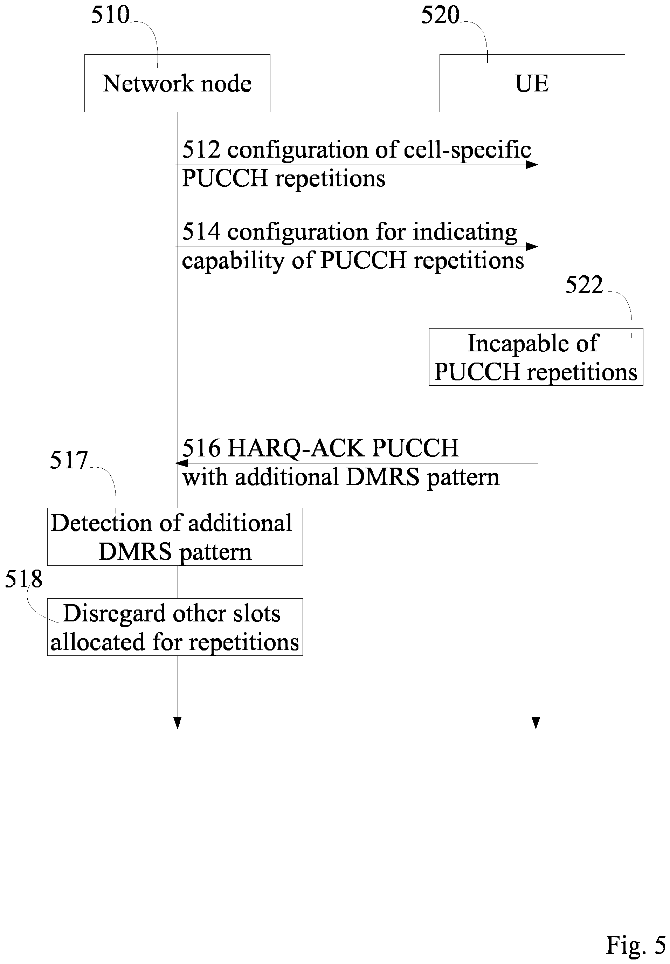

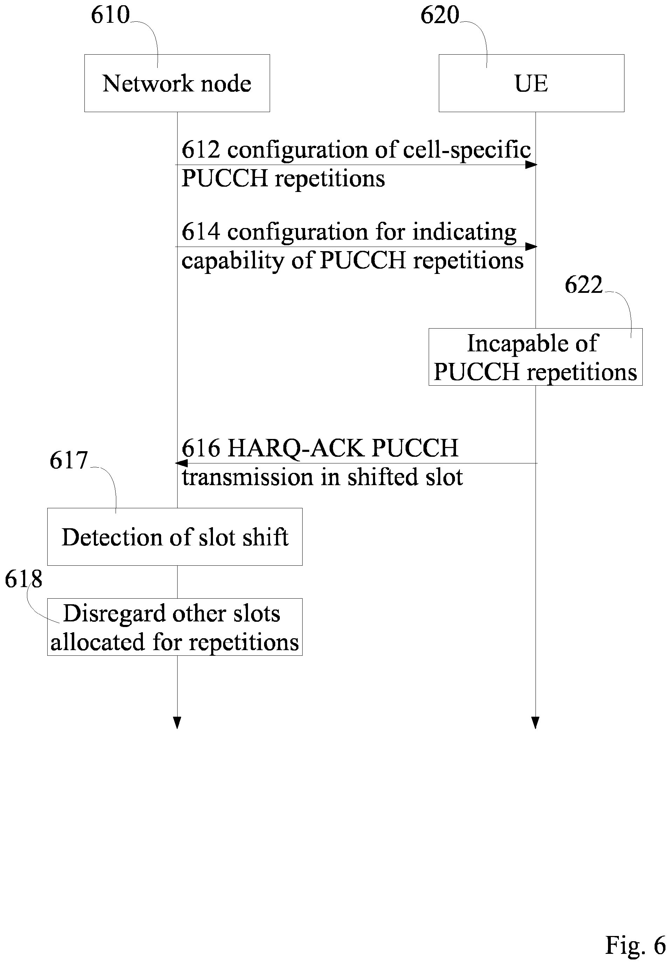

Fig. 3 shows, by way of example, a flowchart of a method. The phases of the illustrated method may be performed by a UE, or by a control device configured to control the functioning thereof, when installed therein. The UE may be, for example, the device 520 of Fig. 5, or the device 620 of Fig. 6, which is configured to perform at least the method 300. The method 300 comprises determining 310, by a user equipment, signal characteristics of a physical uplink control channel to indicate capability or incapability of the apparatus to transmit the physical uplink control channel with repetitions. The method 300 comprises transmitting 320, to a network node, the physical uplink control channel with the signal characteristics indicating capability or incapability of the apparatus to transmit the physical uplink control channel with repetitions.

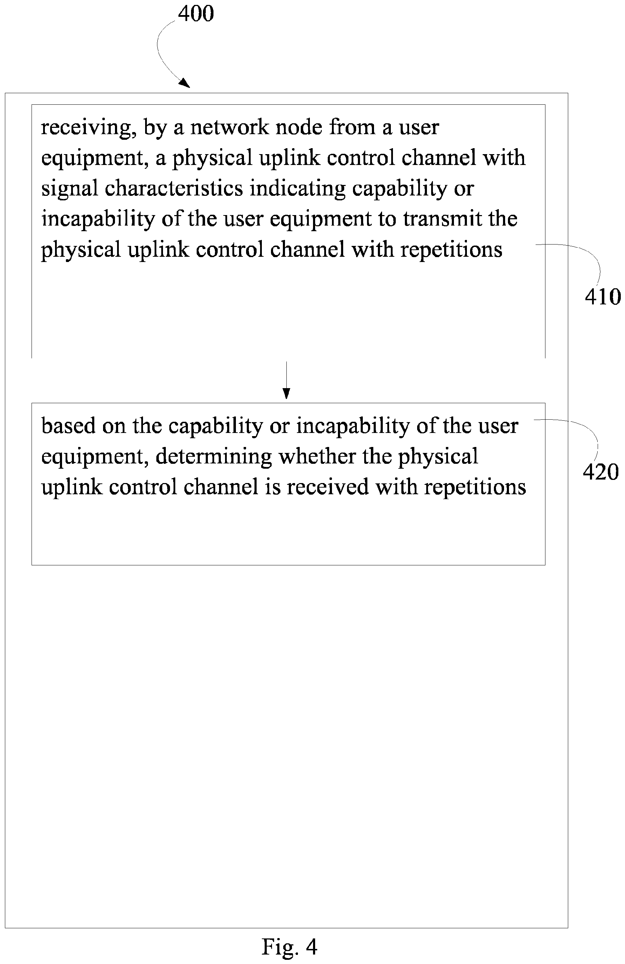

Fig. 4 shows, by way of example, a flowchart of a method. The phases of the illustrated method may be performed by a network node, e.g. gNB, or by a control device configured to control the functioning thereof, when installed therein. The network node may be, for example, the device 510 of Fig. 5, or the device 610 of Fig. 6, which is configured to perform at least the method 400. The method 400 comprises receiving 410, by a network node from a user equipment, a physical uplink control channel with signal characteristics indicating capability or incapability of the user equipment to transmit the physical uplink control channel with repetitions. The method 400 comprises based on the capability or incapability of the user equipment, determining 410 whether the physical uplink control channel is received with repetitions.

The LTE may determine the signal characteristics of the PUCCH based on a received configuration or independently based on standard specifications. The UE may be configured to select a signal characteristic of a PUCCH from a plurality of signal characteristics. Signal characteristic may comprise, for example, a demodulation reference signal pattern which is different than a legacy DRMS; or a slot shift or a specific slot for transmission of the PUCCH; or secondary PUCCH resources, which are different from the originally configured PUCCH resources. Selection of a signal characteristic or signal characteristics may be performed based on capability of the UE, and based on decided purpose of a signal characteristic. The purpose of a signal characteristic may be to indicate either capability or incapability of the LTE to transmit PUCCH with repetitions.

In one example embodiment, capability or incapability of the LTE to transmit on PUCCH with repetitions may be indicated or reported via signal characteristics of the PUCCH transmission. The network may configure the UE, or the UE may determine based on standard specifications, to indicate the capability or incapability via PUCCH signal characteristics. The PUCCH transmission may be a PUCCH carrying an acknowledgement, e.g. the HARQ-ACK of the Msg4, or some other PUCCH transmission. According to the configuration or determination, the UE may adapt and/or modify the signal characteristics of the PUCCH (e.g. carrying the HARQ feedback of the Msg4) to convey its PUCCH repetitions incapability or capability to the network node.

For example, the network node may configure, or the UE may determine, a dedicated DMRS pattern for indicating capability or incapability of the LTE to transmit on PUCCH with repetitions, as shown in the example of Fig. 5. It may be decided that UE capable of PUCCH repetitions may transmit a DMRS that is different compared to legacy DMRS. Alternatively, it may be decided that LTE incapable of PUCCH repetitions may transmit a DMRS that is different compared to legacy DMRS. In case of using the DMRS pattern different from the legacy DMRS, the legacy DMRS might not be transmitted.

According to an example, the UE may be pre-configured to indicate the capability or incapability of PUCCH repetitions via an additional DMRS pattern.

Fig. 5 shows, by way of example, signalling between entities. A network node 510, e.g. gNB, may transmit 512 to a LTE 520 a cell-specific configuration for transmitting on the PUCCH with repetitions, e.g. the acknowledgement (ACK) on the PUCCH with repetitions. The acknowledgement may be HARQ-ACK of the Msg4. The configuration may be performed via higher layer signalling, e.g. via system information block (SIB), in a broadcast manner for all UEs in the cell.

The network node may transmit 514, to the LTE, a configuration for indicating via PUCCH signal characteristics, the LTE capability or incapability to transmit on PUCCH with repetitions. For example, the configuration may comprise an additional DMRS pattern to be used by the UE for indicating its capability or incapability to transmit on PUCCH with repetitions. For example, the configuration may comprise an indicator pointing to a pre-determined additional DMRS pattern to be used by the LTE for indicating its capability or incapability to transmit on PUCCH with repetitions. The configuration may be performed via higher layer signalling, e.g. via SIB, in a broadcast manner for all LTEs in the cell, or via dedicated signalling applying to a specific UE, e.g. only to a specific UE. For example, Msg2 may be used for this purpose. For example, a new field may be added in the Msg2 for conveying the additional DMRS pattern. As another example, an existing field in the Msg2 may be repurposed for conveying the additional DMRS pattern. For example, a new field may be added in the Msg2 with an indicator pointing to a pre-determined additional DMRS pattern to be used by the LTE for indicating its capability or incapability to transmit on PUCCH with repetitions.

Let us consider that in this example, the UE 520 is 522 incapable of configured PUCCH repetitions to transmit e.g. the HARQ-ACK of the Msg4, and that it has been decided that the incapability will be indicated using the additional DMRS pattern.

The UE may transmit 516 a PUCCH transmission, e.g. the acknowledgement, e.g. HARQ-ACK of the Msg4, on the PUCCH with the additionally configured DMRS pattern. PUCCH may be transmitted without repetitions in a slot indicated by the network node for the start of the PUCCH repetitions when configuring the cell-specific PUCCH repetitions.

The additional DMRS configuration may define different characteristics of the DMRS distribution within the slot in terms of DMRS density or DMRS location within the slot, for example. Configuration of the additional DMRS may be, for example, restricted to the PUCCH transmissions before a dedicated PUCCH configuration is available at the UE. PUCCH transmissions may be, for example, the PUCCH carrying the HARQ-ACK of the Msg4, or other PUCCH transmissions.

For example, the DMRS symbols may have a different distribution than a legacy DMRS with the slot. For example, the DMRS symbols may occupy DMRS symbols number {0, 1, 4, 5, 8, 9, 12}, or some other different distribution. The network node may then recognize UE's capability or incapability based on the different distribution of symbols.

As another example, the DMRS symbols may be shifted in time by one or more OFDM symbols. The UCI symbols may also be shifted. The DMRS symbols may occupy OFDM symbols {1, 3, ..., 13}, wherein the first symbol in the slot is symbol number 0, as in Fig. 2 (symbol 220).

The network node may detect whether the additional DMRS pattern has been transmitted or not. For example, the network node may perform two hypothesis on the DMRS pattern that was transmitted by the UE. The DMRS symbols of the additional DMRS pattern may occupy OFDM symbols {1, 3,..., 13}. The DMRS symbols of the original DMRS (legacy DMRS) pattern may occupy OFDM symbols {0, 2,..., 12}.

In a first hypothesis, the network node may cross-correlate the received signal at symbols {0, 2,..., 12} with the DMRS sequence, and evaluate the amplitude of the cross-correlation.

In a second hypothesis, the network node may cross-correlate the received signal at symbols {1, 3,..., 13} with the DMRS sequence, and evaluate the amplitude of the cross-correlation.

The network node may compare the two amplitudes and determine the one providing the largest cross-correlation amplitude. Based on this determination, the network node may determine which DMRS pattern was transmitted by the UE.

In this example, the amplitude of the second hypothesis is larger than the amplitude of the first hypothesis. Thus, the network node may determine or detect 517 that the configured additional DMRS pattern has been transmitted by the UE. DMRS pattern, which is different from the legacy DMRS pattern, has been transmitted by the UE. It may have been decided that usage of the additional DMRS pattern indicates incapability of the UE to transmit PUCCH with repetitions.

The network node may determine, based on the detected additional demodulation reference signal pattern, that the UE is incapable to transmit on PUCCH with repetitions.

Based on determining that the UE is incapable of transmitting on PUCCH with repetitions, the network node may disregard 518 other slots allocated to PUCCH repetitions in the configuration 512. In other words, the network node might not combine the same transmission with other slots reserved for repetitions but which are actually not used by the UE for transmitting. The network node may consider the first PUCCH transmission, e.g. the only PUCCH transmission, for detection of the acknowledgement, e.g. HARQ-ACK feedback.

Based on detecting that the additional DMRS pattern has not been transmitted by the LTE, the network node may determine that the LTE is capable of transmitting on PUCCH with repetitions. Then, the network node may combine the PUCCH repetitions.

As another example of configuring the UE to indicate or report the capability or incapability via PUCCH signal characteristics, the network node may configure a slot shift for transmission of the acknowledgement on the PUCCH for indicating capability or incapability of the LTE to transmit on PUCCH with repetitions, as shown in the example of Fig. 6. It may be decided that UE capable of PUCCH repetitions may apply a slot shift when transmitting the ACK on the PUCCH. Alternatively, it may be decided that LTE incapable of PUCCH repetitions may apply a slot shift when transmitting the ACK on the PUCCH.

According to an example, the UE may be pre-configured to indicate the capability or incapability of PUCCH repetitions via a slot shift or via transmitting on a specific slot.

Fig. 6 shows, by way of example, signalling between entities. A network node 610, e.g. gNB, may transmit 612 to a LTE 620 a cell-specific configuration for transmitting on the PUCCH with repetitions, e.g. the acknowledgement on the PUCCH with repetitions. The acknowledgement may be HARQ-ACK of the Msg4. The configuration may be performed via higher layer signalling, e.g. via system information block (SIB), in a broadcast manner for all UEs in the cell.

The network node may transmit 614, to the LTE, a configuration for indicating via PUCCH signal characteristic, the LTE capability or incapability to transmit on PUCCH with repetitions. For example, the configuration may comprise a configuration of a slot shift for transmission of the ACK on the PUCCH for indicating capability or incapability of the apparatus to transmit on PUCCH with repetitions. The configuration may be performed via higher layer signalling, e.g. via SIB, in a broadcast manner for all LTEs in the cell, or via dedicated signalling applying to a specific UE, e.g. only to a specific UE. For example, Msg2 may be used for this purpose. For example, a new field may be added in the Msg2 for conveying the additional DMRS pattern. As another example, an existing field in the Msg2 may be repurposed for conveying the additional DMRS pattern.

For example, the slot shift may be configured as a slot number out of the slots configured for PUCCH repetitions, wherein UE is expected to transmit the PUCCH in case LTE is incapable or capable of performing repetitions. Unit of the configured slot shift may be, for example, a number of slots, a number of OFDM symbols, or a number of milliseconds. For example, the slot shift may be given as a number of slots. This configured value may directly be added to the value of PDSCH-to-HARQ_feedback timing indicator as included in a DCI to define the slot at which UE is expected to transmit PUCCH. It may be decided whether the addition of the slot shift indicates incapability or capability of transmitting PUCCH repetitions.

Let us consider that in this example, the UE 620 is 622 incapable of configured PUCCH repetitions to transmit e.g. the HARQ-ACK of the Msg4, and that is has been decided that the incapability will be indicated with a slot shift.

The UE may transmit 616 a PUCCH transmission, e.g. the acknowledgement, e.g. HARQ-ACK of the Msg4, in a slot calculated based on the configured slot shift. For example, the slot for the transmission may be calculated as the slot indicated by the network node for the start of the PUCCH repetitions plus the configured slot shift. The slot indicated by the network node for the start of the PUCCH repetitions may be given via PDSCH-to-HARQ_feedback timing indicator field.

For example, the configured slot shift may be 1 slot, which means that the UE may transmit the PUCCH in a slot after the one indicated by the network node as a starting slot. The network node may have configured the second repetition slot as the slot where the LTE is expected to transmit the PUCCH if the UE is incapable of repetitions.

The network node may detect whether a slot shift has been applied by the UE. For example, the network node may perform detection of whether the PUCCH transmission started in the slot indicated by the PDSCH-to-HARQ_feedback timing indicator field or in the subsequent slot, which is the shifted slot in this example.

For example, the network node may measure the energy of the slots, e.g. the first and the second slot, and compare the measurement results with a pre-defined threshold, e.g. a discontinuous transmission (DTX) threshold. If the measurement result is above the threshold for the second slot but not for the first slot, the network node may determine that UE is incapable of performing PUCCH repetitions. Based on the measurements, the network node may determine that the UE has not transmitted in the first slot but has transmitted something in the second slot. Thus, the network node may determine that the UE is incapable of PUCCH repetitions.

In this example, the network node may determine or detect 617 the slot shift, which has been decided to indicate that the UE is incapable of PUCCH repetitions.

Based on determining that the LTE is incapable of transmitting on PUCCH with repetitions, the network node may disregard 618 other slots allocated to PUCCH repetitions in the configuration 612. In other words, the network node might not combine the same transmission with other slots reserved for repetitions but which are actually not used by the UE for transmitting. The network node may consider the PUCCH transmission in the shifted slot, e.g. second slot in this example, for detection of the acknowledgement, e.g. HARQ-ACK feedback.

Detection of no slot shift may be performed based on the energy measurements. If the energy of the first slot is above the threshold, the network node may determine that no slot shift has occurred. Based on detecting that there is no slot shift, the network node may determine that the LTE is capable of transmitting on PUCCH with repetitions. Then, the network node may combine the PUCCH repetitions.

The methods as disclosed herein allow a LTE to report its capability or incapability of performing PUCCH repetitions for the HARQ feedback of the Msg4, with no impact to the PUCCH overhead and coverage performance. LTE capability or incapability may be conveyed to the network by adapting the signal characteristics of the PUCCH, leaving the channel performance invariant. The methods as disclosed herein may enable UE to report its capability or incapability of PUCCH repetitions already during the initial access.

The methods as disclosed herein avoid indication of capability or incapability via Msg1 (random access request) thereby avoiding further segmentation of the configured preambles, which could lead to increased collision probability. The methods as disclosed herein avoid indication of capability or incapability via Msg3 (connection establishment request or RRC request) thereby avoiding further overhead, which could shrink the coverage of the Msg3, since transmission of a larger amount of bits results in tighter signal-to-noise ratio (SNR) requirement for a certain target block error rate (BLER).

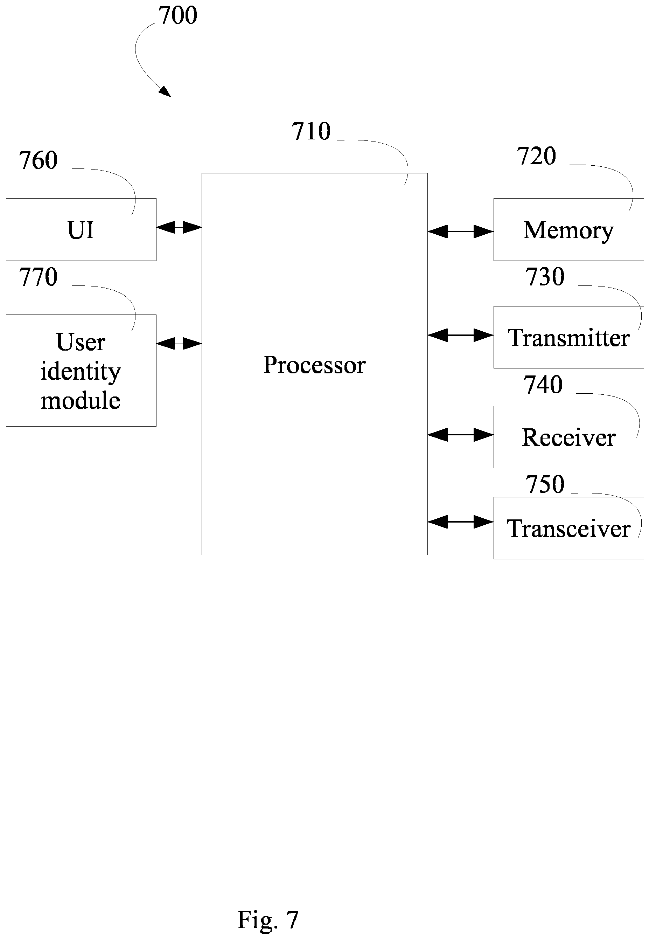

Fig. 7 shows, by way of example, a block diagram of an apparatus capable of performing the method as disclosed herein. Illustrated is device 700, which may comprise, for example, a mobile communication device such as LTE 520 of Fig. 5 or LTE 620 of Fig. 6, or a network node, such as a network node 510 of Fig. 5 or a network node 610 of Fig. 6. Comprised in device 700 is processor 710, which may comprise, for example, a single- or multi-core processor wherein a single-core processor comprises one processing core and a multi-core processor comprises more than one processing core. Processor 710 may comprise, in general, a control device. Processor 710 may comprise more than one processor. Processor 710 may be a control device. A processing core may comprise, for example, a Cortex-A8 processing core manufactured by ARM Holdings or a Steamroller processing core designed by Advanced Micro Devices Corporation. Processor 710 may comprise at least one Qualcomm Snapdragon and/or Intel Atom processor. Processor 710 may comprise at least one application-specific integrated circuit, ASIC. Processor 710 may comprise at least one field-programmable gate array, FPGA. Processor 710 may be means for performing method steps in device 700. Processor 710 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 700 may comprise memory 720. Memory 720 may comprise random-access memory and/or permanent memory. Memory 720 may comprise at least one RAM chip. Memory 720 may comprise solid-state, magnetic, optical and/or holographic memory, for example. Memory 720 may be at least in part accessible to processor 710. Memory 720 may be at least in part comprised in processor 710. Memory 720 may be means for storing information. Memory 720 may comprise instructions, such as computer instructions or computer program code, that processor 710 is configured to execute. When instructions configured to cause processor 710 to perform certain actions are stored in memory 720, and device 700 overall is configured to run under the direction of processor 710 using instructions from memory 720, processor 710 and/or its at least one processing core may be considered to be configured to perform said certain actions. Memory 720 may be at least in part external to device 700 but accessible to device 700.

Device 700 may comprise a transmitter 730. Device 700 may comprise a receiver 740. Transmitter 730 and receiver 740 may be configured to transmit and receive, respectively, information in accordance with at least one cellular or non-cellular standard. Transmitter 730 may comprise more than one transmitter. Receiver 740 may comprise more than one receiver. Transmitter 730 and/or receiver 740 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 700 may comprise a near-field communication, NFC, transceiver 750. NFC transceiver 750 may support at least one NFC technology, such as NFC, Bluetooth, Wibree or similar technologies.

Device 700 may comprise user interface, UI, 760. UI 760 may comprise at least one of a display, a keyboard, a touchscreen, a vibrator arranged to signal to a user by causing device 700 to vibrate, a speaker and a microphone. A user may be able to operate device 700 via UI 760, for example to accept incoming telephone calls, to originate telephone calls or video calls, to browse the Internet, to manage digital files stored in memory 720 or on a cloud accessible via transmitter 730 and receiver 740, or via NFC transceiver 750, and/or to play games.

Device 700 may comprise or be arranged to accept a user identity module 770. User identity module 770 may comprise, for example, a subscriber identity module, SIM, card installable in device 700. A user identity module 770 may comprise information identifying a subscription of a user of device 700. A user identity module 770 may comprise cryptographic information usable to verify the identity of a user of device 700 and/or to facilitate encryption of communicated information and billing of the user of device 700 for communication effected via device 700.

Processor 710 may be furnished with a transmitter arranged to output information from processor 710, via electrical leads internal to device 700, to other devices comprised in device 700. Such a transmitter may comprise a serial bus transmitter arranged to, for example, output information via at least one electrical lead to memory 720 for storage therein. Alternatively to a serial bus, the transmitter may comprise a parallel bus transmitter. Likewise processor 710 may comprise a receiver arranged to receive information in processor 710, via electrical leads internal to device 700, from other devices comprised in device 700. Such a receiver may comprise a serial bus receiver configured to, for example, receive information via at least one electrical lead from receiver 740 for processing in processor 710. Alternatively to a serial bus, the receiver may comprise a parallel bus receiver.

Processor 710, memory 720, transmitter 730, receiver 740, NFC transceiver 750, UI 760 and/or user identity module 770 may be interconnected by electrical leads internal to device 700 in a multitude of different ways. For example, each of the aforementioned devices may be separately connected to a master bus internal to device 700, to allow for the devices to exchange information. However, as the skilled person will appreciate, this is only one example and depending on the embodiment various ways of interconnecting at least two of the aforementioned devices may be selected.

The term "non-transitory" as used herein, is a limitation of the medium itself (i.e., tangible, not a signal) as opposed to a limitation on data storage persistency (e.g., RAM vs. ROM).

As may be used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

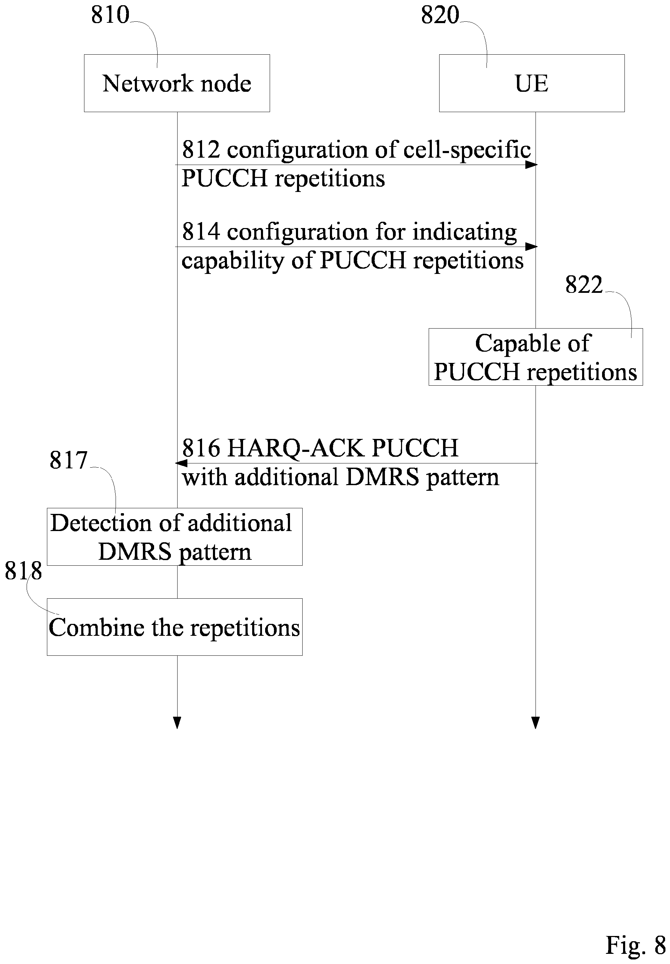

Fig. 8 shows, by way of example, signalling between entities. A network node 810, e.g. gNB, may transmit 812 to a LTE 820 a cell-specific configuration for transmitting on the PUCCH with repetitions, e.g. the acknowledgement (ACK) on the PUCCH with repetitions. The acknowledgement may be HARQ-ACK of the Msg4. The configuration may be performed via higher layer signalling, e.g. via system information block (SIB), in a broadcast manner for all UEs in the cell.

The network node may transmit 814, to the LTE, a configuration for indicating via PUCCH signal characteristics, the LTE capability or incapability to transmit on PUCCH with repetitions. For example, the configuration may comprise an additional DMRS pattern to be used by the UE for indicating its capability or incapability to transmit on PUCCH with repetitions. Configuration of the additional DMRS pattern has been described in the context of Fig. 5.

Let us consider that in this example, the UE 820 is 822 capable of configured PUCCH repetitions to transmit e.g. the HARQ-ACK of the Msg4, and that it has been decided that the capability will be indicated using the additional DMRS pattern.

The UE may transmit 816 a PUCCH transmission, e.g. the acknowledgement, e.g. HARQ-ACK of the Msg4, on the PUCCH with the additionally configured DMRS pattern. PUCCH may be transmitted with repetitions according to the configuration 812.

The network node may detect whether the additional DMRS pattern has been transmitted or not, as described in the context of Fig. 5.

The network node may determine or detect 817 that the configured additional DMRS pattern has been transmitted by the UE. DMRS pattern, which is different from the legacy DMRS pattern, has been transmitted by the UE. It may have been decided that usage of the additional DMRS pattern indicates capability of the LTE to transmit PUCCH with repetitions.

The network node may determine, based on the detected additional demodulation reference signal pattern, that the UE is capable to transmit on PUCCH with repetitions.

Based on detecting that the UE is capable of transmitting on PUCCH with repetitions, the network node may combine 818 the repetitions.

Based on detecting that the additional DMRS pattern has not been transmitted by the LTE, the network node may determine that the UE is incapable of transmitting on PUCCH with repetitions. Then, the network node may disregard other slots allocated to PUCCH repetitions in the configuration 812.

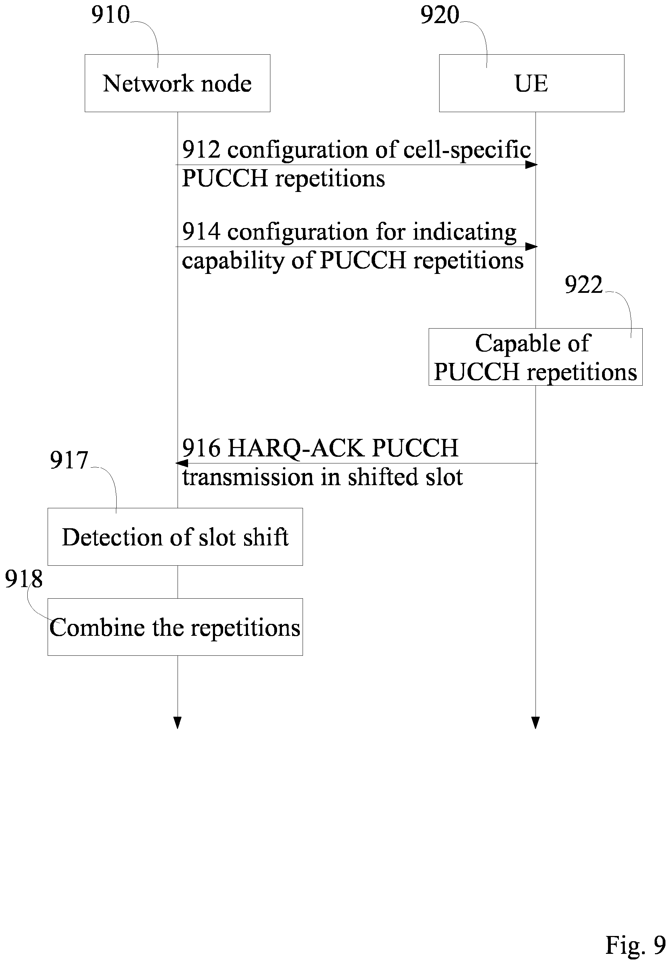

Fig. 9 shows, by way of example, signalling between entities. A network node 910, e.g. gNB, may transmit 912 to a LTE 920 a cell-specific configuration for transmitting on the PUCCH with repetitions, e.g. the acknowledgement on the PUCCH with repetitions. The acknowledgement may be HARQ-ACK of the Msg4. The configuration may be performed via higher layer signalling, e.g. via system information block (SIB), in a broadcast manner for all UEs in the cell.

The network node may transmit 914, to the LTE, a configuration for indicating via PUCCH signal characteristic, the LTE capability or incapability to transmit on PUCCH with repetitions. For example, the configuration may comprise a configuration of a slot shift for transmission of the ACK on the PUCCH for indicating capability or incapability of the apparatus to transmit on PUCCH with repetitions. Configuration of the slot shift has been described in the context of Fig. 6.

Let us consider that in this example, the UE 920 is 922 capable of configured PUCCH repetitions to transmit e.g. the HARQ-ACK of the Msg4, and that it has been decided that the capability will be indicated with a slot shift.

The UE may transmit 916 a PUCCH transmission, e.g. the acknowledgement, e.g. HARQ-ACK of the Msg4, in a slot calculated based on the configured slot shift.

The network node may detect whether a slot shift has been applied by the UE, as described in the context of Fig. 6.

In this example, the network node may determine or detect 917 the slot shift, which has been decided to indicate that the UE is capable of PUCCH repetitions.

Based on determining that the UE is capable of transmitting on PUCCH with repetitions, the network node may combine 918 the repetitions.

Based on detecting that there is no slot shift, the network node may determine that the UE is incapable of transmitting on PUCCH with repetitions. Then, the network node may disregard other slots allocated to PUCCH repetitions in the configuration 912.

According to an example, the LTE may be able to read broadcast information that allows it to perform a selection of second or secondary physical resources, by which it may indicate its capability or incapability of PUCCH repetitions to the network node. For example, the UE may select a different, e.g. completely different, PUCCH resource set than first PUCCH resources, which have been originally configured or pre-determined. The first resources or originally configured PUCCH resources may be the legacy resources, or, for example, the resources configured by the network for transmission of the HARQ-ACK of Msg4. For example, the second resources may be different in at least one of the following: a time domain, or a frequency domain, or a code domain. Then, the network node may detect that the LTE transmits on the second resources. Based on detecting that the LTE transmits on the second resources, the network node may determine that the UE is capable of PUCCH repetitions. Alternatively, the network node may determine that the UE is incapable of PUCCH repetitions based on detecting that the UE transmits on the second resources. Usage of second or secondary PUCCH resources may indicate capability or incapability, depending on how it has been decided. If the second resources indicate capability, and the UE uses the first resources (originally configured PUCCH resources), the network node may determine that the UE is incapable of PUCCH repetitions. If the second resources indicate capability, and the UE uses the first PUCCH resources, the network node may determine that the UE is capable of PUCCH repetitions.

For UE to be able to select secondary physical resources, those resources may be pre-reserved by the network node. Physical resources may be pre-reserved in time and frequency domain. Alternatively, or additionally, code resources, such as time domain orthogonal cover code, may be reserved for this purpose.

## Claims

1. An apparatus comprising means for:
determining signal characteristics of a physical uplink control channel to indicate capability or incapability of the apparatus to transmit the physical uplink control channel with repetitions; and
transmitting, to a network node, the physical uplink control channel with the signal characteristics indicating capability or incapability of the apparatus to transmit the physical uplink control channel with repetitions.

2. The apparatus of claim 1, wherein the signal characteristics comprise a dedicated demodulation reference signal pattern for indicating capability or incapability of the apparatus to transmit the physical uplink control channel with repetitions.

3. The apparatus of claim 2, wherein the means are further configured for:
transmitting the physical uplink control channel with the dedicated demodulation reference signal pattern.

4. The apparatus of claim 1, wherein the signal characteristics comprise a slot shift or a specific slot for transmission of the physical uplink control channel for indicating capability or incapability of the apparatus to transmit the physical uplink control channel with repetitions.

5. The apparatus of claim 4, wherein the means are further configured for:
transmitting the physical uplink control channel in a slot different than the one indicated by the network node for transmission of the physical uplink control channel, wherein the slot is determined based on a slot shift or a specific slot according to configuration or pre-configuration.

6. The apparatus of claim 1, wherein the signal characteristics comprise a second physical uplink control channel resource for transmission of the physical uplink control channel, wherein the second physical uplink control channel resource is different from a first physical uplink control channel resource for transmission of the physical uplink control channel in at least one of the following: a time domain, a frequency domain, or a code domain, wherein the second physical uplink control channel resource indicates capability of the apparatus to transmit the physical uplink control channel with repetitions and the first control channel resource indicates incapability of the apparatus to transmit the physical uplink control channel with repetitions.

7. The apparatus of claim 6, wherein the means are further configured for:
transmitting the physical uplink control channel on the second physical uplink control channel resource.

8. The apparatus of any preceding claim, wherein the means are further configured for:
receiving a cell-specific configuration for transmitting the physical uplink control channel with repetitions.

9. The apparatus of any preceding claim, wherein the transmitted physical uplink control channel comprises an acknowledgement, ACK, or a negative acknowledgement, NACK, of a radio resource control setup message.

10. An apparatus comprising means for:
receiving, from a user equipment, a physical uplink control channel with signal characteristics indicating capability or incapability of the user equipment to transmit the physical uplink control channel with repetitions; and
based on the capability or incapability of the user equipment, determining whether the physical uplink control channel is received with repetitions.

11. The apparatus of claim 10, wherein the signal characteristics comprise a demodulation reference signal pattern for indicating capability or incapability of the user equipment to transmit the physical uplink control channel with repetitions.

12. The apparatus of claim 10 or 11, wherein the means are further configured for:
receiving the physical uplink control channel with the dedicated demodulation reference signal pattern; and
determining, based on the dedicated demodulation reference signal pattern, that the user equipment is capable or incapable to transmit the physical uplink control channel with repetitions.

13. A method, comprising:
determining, by a user equipment, signal characteristics of a physical uplink control channel to indicate capability or incapability of the user equipment to transmit the physical uplink control channel with repetitions; and
transmitting, to a network node, the physical uplink control channel with the signal characteristics indicating capability or incapability of the user equipment to transmit the physical uplink control channel with repetitions.

14. A method, comprising:
receiving, by a network node from a user equipment, a physical uplink control channel with signal characteristics indicating capability or incapability of the user equipment to transmit the physical uplink control channel with repetitions; and
based on the capability or incapability of the user equipment, determining whether the physical uplink control channel is received with repetitions.

15. A computer program comprising instructions, which, when executed by an apparatus, cause the apparatus to perform at least:
determining signal characteristics of a physical uplink control channel to indicate capability or incapability of the apparatus to transmit the physical uplink control channel with repetitions; and
transmitting, to a network node, the physical uplink control channel with the signal characteristics indicating capability or incapability of the apparatus to transmit the physical uplink control channel with repetitions.
